# EUROPÄISCHE PATENTANMELDUNG

(11) **EP 2 457 851 A1**
(43) Veröffentlichungstag der Anmeldung: **30.05.2012**
(21) Anmeldenummer: 10015063.0
(22) Anmeldetag: 27.11.2010
(51) Int. Cl.: B65G 1/137, B65G 47/51, B65G 47/90

(54) **Verfahren zum Sortieren von auf einer Horizontalfördereinrichtung transportierten Behältern**

(71) Anmelder: Beewen GmbH & Co. KG, 57078 Siegen (DE)
(72) Erfinder: Beewen, Udo, 57076 Siegen (DE)
(74) Vertreter: Walther, Robert

(57) **Zusammenfassung**

Gegenstand der Erfindung ist ein Verfahren zum Sortieren von auf einer Horizontalfördereinrichtung (1) transportierten Behältern (5), wobei der Horizontalfördereinrichtung (1) mehrere Hubeinrichtungen (20) zugeordnet sind, wobei die mehreren Hubeinrichtungen (20) nebeneinander entlang der Horizontalfördereinrichtung (1) angeordnet sind, wobei eine Steuerung vorgesehen ist, wobei durch die Steuerung eine oder mehrere Hubeinrichtungen (20) aktiviert werden, um einen oder mehrere bestimmte Behälter (5) aus dem Weg nachfolgender Behälter (5) auf der Horizontalfördereinrichtung (1) zu erbringen, und wobei danach durch die Hubeinrichtungen (20) die aufgenommenen Behälter (5) zu einer vorbestimmbaren Zeit, in vorbestimmbarer Reihenfolge auf der Horizontalfördereinrichtung (1) abgesetzt werden.

## Beschreibung

Die Erfindung betrifft sowohl ein Verfahren zum Sortieren von auf einer Horizontalfördereinrichtung transportierten Behältern, eine solche Horizontalfördereinrichtung zur Durchführung des Verfahrens, eine Hubeinrichtung, insbesondere zur Durchführung des Sortierverfahrens, als auch ein Regallager mit einer Horizontalfördereinrichtung und mit mehreren Hubeinrichtungen.

Regallager und hier insbesondere auch Hochregallager sind aus dem Stand der Technik hinreichend bekannt. Bei einem Regallager, insbesondere einem Hochregallager umfasst das Regal mehrere Ebenen und mehrere Gassen, wobei auf den einzelnen Ebenen längs zu den Gassen üblicherweise Behälter gelagert sind, beispielsweise in Form von Kisten. Diese Behälter nehmen einzelne Teile auf, wobei die Behälter mit den Teilen zum einen aus dem Regal den einzelnen Arbeitsplätzen zugeführt werden, bzw. zum anderen diese Kisten zurück in das Regal gebracht werden. Die Entnahme bzw. auch die Zufuhr solcher Behälter aus bzw. in das Regal kann auf durchaus unterschiedliche Weise erfolgen. Dies kann im Einzelfall durch Regalbediengeräte erfolgen oder auch durch sogenannte Shuttles oder Satellitenfahrzeuge, die auf Schienen laufen, die in den Gassen der einzelnen Ebenen des Regallagers angeordnet sind. Ein solches Shuttle oder auch Satellitenfahrzeug ist in der Lage den Behälter aus dem Regal zu entnehmen und zu einer an der Stirnseite des Regals befindlichen Übergabeplattform oder Übergabestation zu transportieren. Im Bereich einer jeden Gasse befindet sich auf jeder Ebene eine solche Übergabestation. Vor der Übergabestation ist ein Lift vorgesehen. Ein solcher Lift umfasst einen Stützenkörper, wobei der Stützenkörper eine vertikal bewegliche Aufnahme mit einem Gurtförderer zur Übernahme des Behälters zeigt. Mithilfe der Aufnahme des Lifts ist es nun möglich, von den einzelnen Übergabestationen die Behälter zu übernehmen. Die Reihenfolge der Entnahme der einzelnen Behälter von den einzelnen Übergabestationen wird durch den Lift bestimmt. Das heißt, der Lift ist durchaus in der Lage zu sortieren, d. h. die Reihenfolge der entnommenen Behälter zu bestimmen. Durch den Lift werden die entsprechenden Behälter am unteren Ende auf einer Horizontalfördereinrichtung abgelegt, der die Behälter in der durch den Lift vorbestimmten Reihenfolge beispielsweise einem Montagearbeitsplatz zuführt. Das heißt, es findet durch den Lift eine Sortierung statt. Die Kapazität eines solchen Regallagers zur Ausschleusung von Behältern ist aufgrund der geringen Sortierkapazität des Lifts insgesamt allerdings begrenzt. Denn der Lift muss mit seiner Aufnahme zur Entnahme eines jeden Behälters immer erst in den Bereich der jeweiligen Übergabestation gefahren werden, dort den Behälter übernehmen, um dann nach unten zu fahren und den Behälter auf der Horizontalfördereinrichtung abzulegen.

Es besteht durchaus ein hohes Interesse daran, dem einzelnen Arbeitsplatz Behälter in bestimmter Reihenfolge zuzuführen. Dies natürlich ohne eine signifikante Verminderung der Kapazität eines solchen Regallagers beim Aus- bzw. Einlagern von Behältern, insbesondere in einem Hochregallager.

Die der Erfindung zugrunde liegende Aufgabe besteht demzufolge darin, ein Verfahren zum Sortieren von auf einer Horizontalfördereinrichtung transportierten Behältern bereitzustellen, das eine hohe Sortierkapazität aufweist.

Zur Lösung der Aufgabe wird bei einem Sortierverfahren mit auf einer Horizontalfördereinrichtung transportierten Behältern vorgeschlagen, dass der Horizontalfördereinrichtung mehrere Hubeinrichtungen zugeordnet sind, wobei die mehreren Hubeinrichtungen nebeneinander entlang der Horizontalfördereinrichtung angeordnet sind, wobei eine Steuerung vorgesehen ist, wobei durch die Steuerung eine oder mehrere Hubeinrichtungen aktiviert werden, um einen oder mehrere vorbestimmbare Behälter aus dem Weg nachfolgender Behälter auf der Horizontalfördereinrichtung zu bringen, und wobei danach durch die Hubeinrichtungen die aufgenommenen Behälter zu einer vorbestimmbaren Zeit in einer vorbestimmbaren Reihenfolge auf der Horizontalfördereinrichtung abgesetzt werden. Bei dem Betrieb eines Hochregallagers ist bekannt, auf welchen Plätzen im Hochregallager welche Behälter abgestellt sind. Es ist ebenfalls beim Auslagern bekannt, welche Behälter in welcher Reihenfolge durch den Lift auf einer Horizontalfördereinrichtung abgesetzt worden sind. Die Feststellung, welcher Behälter zu welcher Zeit auf einer Horizontalfördereinrichtung abgesetzt worden ist, erfolgt im Rahmen einer sogenannten Datenverfolgung.

Zum Sortieren der Reihenfolge der Behälter wird nun so vorgegangen, dass durch die mehreren neben der Horizontalfördereinrichtung angeordneten Hubeinrichtungen bestimmte Behälter aus dem Weg der Horizontalfördereinrichtung aufgenommen werden, sodass weitere dahinter befindliche Behälter unter diesen Behältern auf der Horizontalfördereinrichtung passieren können. In Abhängigkeit von der Anzahl solcher Hubeinrichtungen besteht die Möglichkeit, eine entsprechende Mehrzahl an Behältern für beispielsweise einen Auftrag zu kommissionieren. Das heißt, es werden die Behälter einer Kommission durch eine entsprechende Anzahl von Hubeinrichtungen aufgenommen, und dann in einer vorbestimmbaren Reihenfolge auf dem Horizontalförderer abgesetzt, sodass hierdurch die Reihenfolge der am Arbeitsplatz ankommenden Behälter vorbestimmbar ist.

Vorteilhafte Merkmale und besondere Ausgestaltungen der Erfindung sind den Unteransprüchen zu entnehmen.

So ist insbesondere vorgesehen, dass der Behälter durch die Hubeinrichtung senkrecht über die Horizontalfördereinrichtung gehoben wird und zunächst in dieser Stellung verbleibt, bis die Behälter einer Kommission gesammelt worden sind, um dann entsprechend in einer vorbestimmbaren Reihenfolge, wie dies bereits zuvor beschrieben worden ist, auf der Horizontalfördereinrichtung abgesetzt zu werden. Hierbei ist die Hubhöhe größer als die Behälterhöhe, um nachfolgenden Behältern den Lauf unter den aufgenommenen Behältern auf der Horizontalfördereinrichtung zu ermöglichen.

Nach einem besonderen Merkmal der Erfindung ist vorgesehen, dass im Bereich der einzelnen Hubeinrichtungen Lichtschranken vorgesehen sind, wobei die Lichtschranken in Verbindung mit der Steuerung der Ortsbestimmung des jeweiligen Behälters dienen.

Gegenstand der Erfindung ist ebenfalls eine Horizontalfördereinrichtung zur Durchführung des Sortierverfahrens, wobei sich die Horizontalfördereinrichtung im Bereich der Hubeinrichtungen durch Öffnungen auszeichnet, wobei zur Bildung der Öffnungen die Horizontalfördereinrichtung Rollen umfasst, die beabstandet zueinander verlaufen, um für die jeweilige Hubeinrichtung die Möglichkeit zu schaffen, die Behälter von unten durch die Horizontalfördereinrichtung hindurch zu erfassen und anzuheben.

In diesem Zusammenhang ist Gegenstand der Erfindung auch eine Mehrzahl an Hubeinrichtungen, die insbesondere zum Sortieren von Behältern im Sinne der Bereitstellung der Behälter in einer bestimmten Reihenfolge geeignet sind, die auf einer Horizontalfördereinrichtung transportiert werden.

Die Hubeinrichtung umfasst nach einem Merkmal der Erfindung ein Gestell, wobei das Gestell einen im Gestell vertikal verfahrbaren Schlitten mit einer Aufnahme für einen Behälter aufweist, wobei der Schlitten mit einem Antrieb in Verbindung steht. Um ein Verkanten des Schlittens während der Vertikalbewegung zu vermeiden, ist der Schlitten vorteilhaft durch Rollen im Gestell vertikal verfahrbar geführt.

In Abhängigkeit von der Fördergeschwindigkeit der einzelnen Behälter auf der Horizontalfördereinrichtung, sowie dem Abstand der einzelnen Behälter auf der Horizontalfördereinrichtung muss das Anheben der Behälter verhältnismäßig schnell erfolgen. In diesem Zusammenhang ist nach einem besonderen Merkmal der Erfindung vorgesehen, dass der Antrieb einen Kurbeltrieb umfasst. Ein solcher Kurbeltrieb zeichnet sich durch einen sinusförmigen Geschwindigkeitsverlauf aus, was bedeutet, dass mit einem solchen Kurbeltrieb zum Anheben der Behälter erhebliche Geschwindigkeiten erreicht werden können.

Im Einzelnen ist in diesem Zusammenhang vorgesehen, dass der Schlitten eine quer zur Hubrichtung verlaufende Führungsschiene umfasst, wobei der Kurbeltrieb einen Kurbelarm aufweist, wobei der Kurbelarm an seinem einen Ende mit dem Antriebsmotor des Antriebs in Verbindung steht, und wobei der Kurbelarm mit seinem anderen Ende verschieblich in der Führungsschiene gelagert ist. Hierbei ist, um eine möglichst gleichmäßige Bewegung des Schlittens in vertikaler Richtung zu realisieren, der Kurbelarm endseitig mit einer Rolle versehen, die durch die Führungsschiene aufgenommen ist. Der Antriebsmotor ist insofern ortsfest im Gestell gelagert.

Gegenstand der Erfindung ist ebenfalls ein Regallager, gekennzeichnet durch eine Horizontalfördereinrichtung der zuvor beschriebenen Art, mit mehreren Hubeinrichtungen, wie sie ebenfalls zuvor beschrieben worden sind.

Anhand der Zeichnungen wird die Erfindung nachstehend beispielhaft näher erläutert.
- Fig. 1: zeigt die Horizontalfördereinrichtung in einer perspektivischen Darstellung;
- Fig. 2: zeigt eine Hubeinrichtung mit einem Teil der Horizontalfördereinrichtung in einer perspektivischen Darstellung in einer Ansicht schräg von vorne;

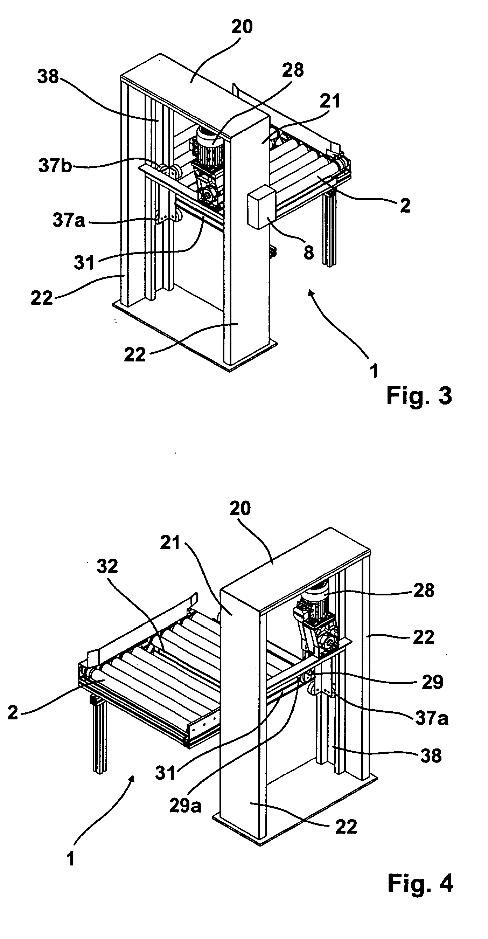

- Fig. 3: zeigt eine Ansicht auf eine Hubeinrichtung in perspektivischer Darstellung von hinten;
- Fig. 4: zeigt eine weitere Darstellung gemäß Fig. 3 in einer anderen Ansicht;
- Fig. 5a - 5d: zeigen den Verlauf des Kurbelarmes beim Anheben des Schlittens.

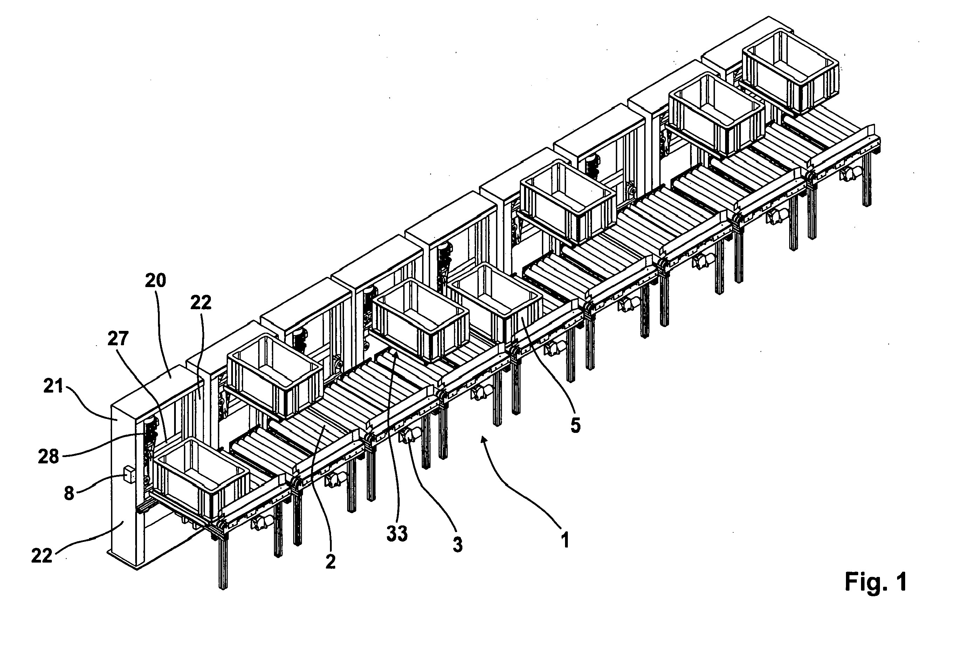

Gemäß Fig. 1 ist die Fördereinrichtung 1 in Form eines Ausschnittes dargestellt. Die Fördereinrichtung 1 umfasst im Bereich der einzelnen Hubeinrichtungen 20 eine Mehrzahl von Rollen 2, wobei die einzelnen Rollen 2 durch einen Motor 3 angetrieben sind, um die auf der Fördereinrichtung 1 befindlichen Behälter 5 auf der Fördereinrichtung zu verfahren.

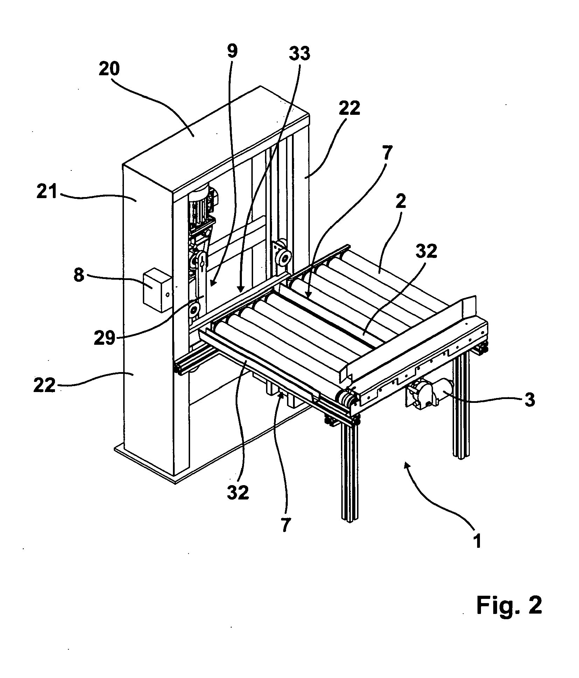

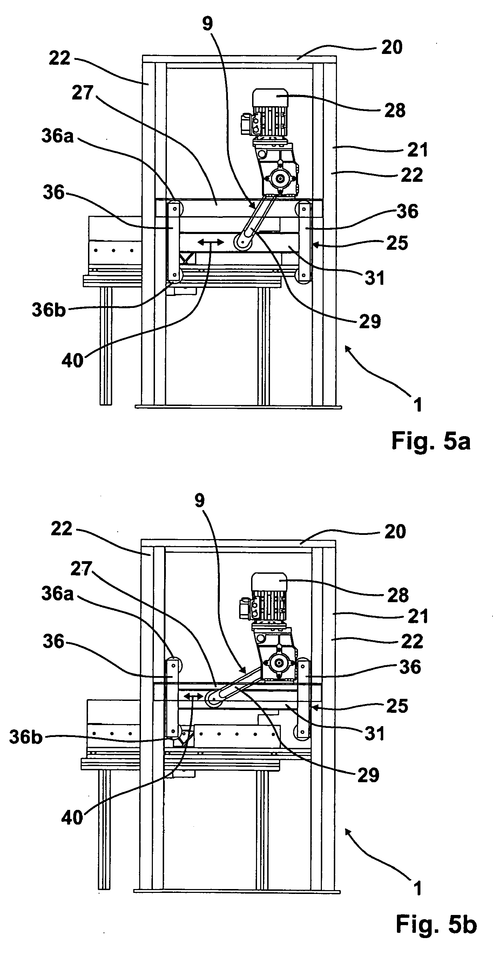

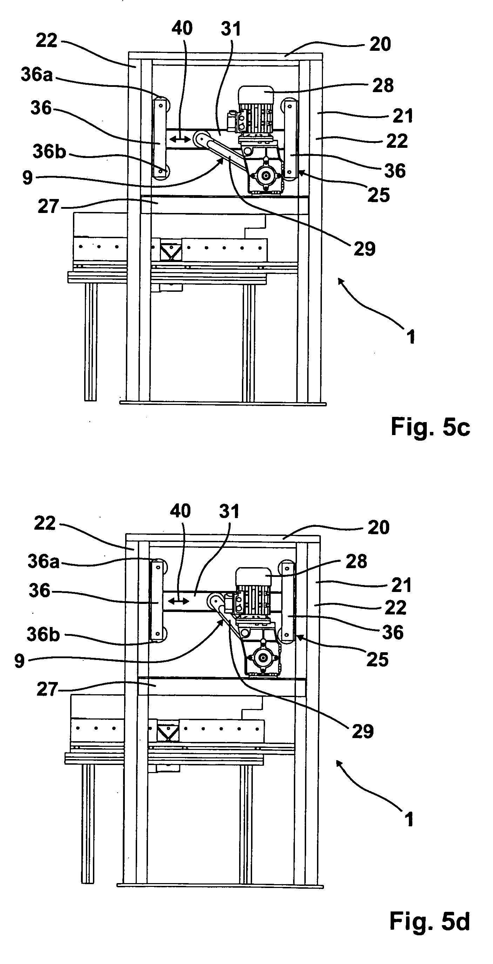

Die Hubeinrichtungen 20, die sich nebeneinander angeordnet unmittelbar neben der Fördereinrichtung 1 befinden, umfassen ein Gestell 21, wobei das Gestell zwei vertikale Stützen 22 zeigt, die der Aufnahme des mit 25 bezeichneten Schlittens dienen (Fig. 5a - 5d). Das Gestell 21 weist darüber hinaus eine Traverse 27 auf, an dem der Antriebsmotor 28 ortsfest gelagert ist. Der Antriebsmotor 28 zeigt, wie sich dies beispielweise aus der Fig. 2 ergibt, einen Kurbelarm 29 als Teil einer Kurbel auf, wobei der Kurbelarm 29 mit einer endseitig daran angeordneten Rolle 29a in einer Führungsschiene 31 quer zur Hubrichtung verschieblich geführt ist. Die Führungsschiene 31 ist Bestandteil des Schlittens 25. Der Schlitten 25 besitzt darüber hinaus zwei Läufer 36, wobei ein jeder Läufer 36 zu beiden Enden jeweils eine Rolle 36a, 36b aufweist, sowie zwei im Winkel von 90° dazu verlaufende Rollen 37a, 37b, die in einer Vertikalführung 38 der vertikalen Stützen 22 längsverschieblich geführt sind.

Die Hubbewegung des Schlittens 25 ergibt sich anschaulich aus den Fig. 5a - 5d. Der Motor 28, der auf der Traverse 27 ortsfest gelagert ist, besitzt den Kurbelarm 29, der in der Führungsschiene 31 entlang des Doppelpfeiles 40 beweglich geführt ist. Bei Bewegung des Kurbelarmes 29 wird der Schlitten 25 in vertikaler Richtung verfahren. Hierbei bewegt sich ebenfalls die Führungsschiene 31 in vertikaler Richtung und ist insofern in der Lage über die an der Führungsschiene 31 angeordneten Arme 32 Behälter 5 anzuheben, wie dies in Fig. 1 dargestellt ist. Die Arme 32 bilden insofern in Verbindung mit der Führungsschiene 31 die Aufnahme 33.

Wie insbesondere aus Fig. 2 erkennbar ist, tauchen die Arme 32 zwischen jeweils zwei zur Bildung einer Durchtrittsöffnung 7beabstandet zueinander angeordneten Rollen 2 der Horizontalfördereinrichtung 1 ein. Seitlich am Gestell der Hubeinrichtung befindet sich eine Lichtschranke 8, die in Verbindung mit einer Steuerung der Positionsbestimmung des jeweiligen Behälters auf der Fördereinrichtung 1 im Bereich einer jeden Hubeinrichtung dient, um sicherzustellen, dass durch die Arme 32 der Aufnahme 33 ein Behälter 5 sicher aufgenommen werden kann.

### Bezugszeichenliste:

- 1: Horizontalfördereinrichtung
- 2: Rollen
- 3: Motor
- 5: Behälter
- 7: Durchtrittsöffnung
- 8: Lichtschranke
- 9: Kurbeltrieb
- 20: Hubeinrichtung
- 21: Gestell
- 22: Stützen
- 25: Schlitten
- 27: Traverse
- 28: Antriebsmotor
- 29: Kurbelarm
- 29a: Rolle
- 31: Führungsschiene
- 32: Arme
- 33: Aufnahme
- 36: Läufer
- 36a: Rolle des Läufers
- 36b: Rolle des Läufers
- 37a: Rolle des Läufers
- 37b: Rolle des Läufers
- 38: Vertikalführung
- 40: Doppelpfeil

## Patentansprüche

1. Verfahren zum Sortieren von auf einer Horizontalfördereinrichtung transportierten Behältern (5), wobei der Horizontalfördereinrichtung (1) mehrere Hubeinrichtungen (20) zugeordnet sind, wobei die mehreren Hubeinrichtungen nebeneinander entlang der Horizontalfördereinrichtung (1) angeordnet sind, wobei eine Steuerung vorgesehen ist, wobei durch die Steuerung eine oder mehrere Hubeinrichtungen (20) aktiviert werden, um einen oder mehrere bestimmte Behälter aus dem Weg nachfolgender Behälter (5) auf der Horizontalfördereinrichtung (1) zu erbringen, und wobei danach durch die Hubeinrichtungen die aufgenommenen Behälter zu einer vorbestimmbaren Zeit, in vorbestimmbarer Reihenfolge auf der Horizontalfördereinrichtung (1) abgesetzt werden.

2. Verfahren nach Anspruch 1,
**dadurch gekennzeichnet,**
**dass** der Behälter (5) durch die Hubeinrichtung (20) über die Horizontalfördereinrichtung (1) gehoben wird.

3. Verfahren nach einem der voranstehenden Ansprüche,
**dadurch gekennzeichnet,**
**dass** die Hubhöhe größer als die Höhe des Behälters (5) ist.

4. Verfahren nach einem der voranstehenden Ansprüche,
**dadurch gekennzeichnet,**
**dass** im Bereich der Hubeinrichtungen (20) Lichtschranken (8) vorgesehen sind, um eine Ortsbestimmung des jeweiligen Behälters (5) auf der Horizontalfördereinrichtung (1) vorzunehmen.

5. Verfahren nach einem der voranstehenden Ansprüche,
**dadurch gekennzeichnet,**
**dass** die Lichtschranken (8) mit der Steuerung in Verbindung stehen.

6. Horizontalfördereinrichtung zur Durchführung des Verfahrens nach einem der voranstehenden Ansprüche,
**dadurch gekennzeichnet,**
**dass** die Horizontalfördereinrichtung (1) im Bereich der Hubeinrichtungen Öffnungen (7) aufweist.

7. Horizontalfördereinrichtung zur Durchführung des Verfahrens nach Anspruch 6,
**dadurch gekennzeichnet,**
**dass** die Horizontalfördereinrichtung (1) im Bereich der Hubeinrichtungen (20) Rollen (2) aufweist, die, zur Bildung der Öffnungen (7), beabstandet zueinander verlaufen.

8. Hubeinrichtung, insbesondere zur Durchführung des Verfahrens nach einem der voranstehenden Ansprüche,
**dadurch gekennzeichnet,**
**dass** die Hubeinrichtung (20) ein Gestell (21) aufweist, wobei das Gestell (21) einen im Gestell vertikal verfahrbaren Schlitten (25) mit einer Aufnahme (33) für einen Behälter (5) aufweist, wobei der Schlitten (25) mit einem Antrieb (9, 28) in Verbindung steht.

9. Hubeinrichtung, insbesondere zur Durchführung des Verfahrens nach Anspruch 8,
**dadurch gekennzeichnet,**
**dass** der Schlitten (25) durch Rollen (36a, 36b; 37a, 37b) im Gestell (21) geführt verfahrbar ist.

10. Hubeinrichtung, insbesondere zur Durchführung des Verfahrens nach einem der Ansprüche 8 oder 9,
**dadurch gekennzeichnet,**
**dass** der Antrieb einen Kurbeltrieb (9) umfasst.

11. Hubeinrichtung, insbesondere zur Durchführung des Verfahrens nach einem der Ansprüche 8 bis 10,
**dadurch gekennzeichnet,**
**dass** der Schlitten (25) eine quer zur Hubrichtung verlaufende Führungsschiene umfasst, wobei der Kurbeltrieb (9) einen Kurbelarm (29) aufweist, wobei der Kurbelarm (29) an seinem einen Ende mit dem Antriebsmotor (28) in Verbindung steht, und wobei der Kurbelarm (29) mit seinem anderen Ende verschieblich in der Führungsschiene (31) gelagert ist.

12. Hubeinrichtung, insbesondere zur Durchführung des Verfahrens nach einem der Ansprüche 8 bis 11,
**dadurch gekennzeichnet,**
**dass** der Kurbelarm (29) endseitig eine Rolle (29a) zur Aufnahme durch die Führungsschiene (31) aufweist.

13. Hubeinrichtung, insbesondere zur Durchführung des Verfahrens nach einem der Ansprüche 8 bis 12,
**dadurch gekennzeichnet,**
**dass** der Antriebsmotor (28) ortsfest im Gestell (21) gelagert ist.

14. Regallager mit einer Horizontalfördereinrichtung und mit mehreren Hubeinrichtungen (20)
**gekennzeichnet durch**
einen der Ansprüche 8 bis 13.

## Geänderte Patentansprüche

### Geänderte Patentansprüche gemäss Regel 137(2) EPÜ.

**1.** Verfahren zum Sortieren von auf einer Horizontalfördereinrichtung transportierten Behältern (5), wobei der Horizontalfördereinrichtung (1) mehrere Hubeinrichtungen (20) zugeordnet sind, wobei die mehreren Hubeinrichtungen nebeneinander entlang der Horizontalfördereinrichtung (1) angeordnet sind, wobei eine Steuerung vorgesehen ist, wobei durch die Steuerung eine oder mehrere Hubeinrichtungen (20) aktiviert werden, um einen oder mehrere bestimmte Behälter aus dem Weg nachfolgender Behälter (5) auf der Horizontalfördereinrichtung (1) zu verbringen, und wobei danach durch die Hubeinrichtungen die aufgenommenen Behälter zu einer vorbestimmbaren Zeit, in vorbestimmbarer Reihenfolge auf der Horizontalfördereinrichtung (1) abgesetzt werden.

**2.** Verfahren nach Anspruch 1,
**dadurch gekennzeichnet,**
**dass** der Behälter (5) durch die Hubeinrichtung (20) über die Horizontalfördereinrichtung (1) gehoben wird.

**3.** Verfahren nach einem der voranstehenden Ansprüche,
**dadurch gekennzeichnet,**
**dass** die Hubhöhe größer als die Höhe des Behälters (5) ist.

**4.** Verfahren nach einem der voranstehenden Ansprüche,
**dadurch gekennzeichnet,**
**dass** im Bereich der Hubeinrichtungen (20) Lichtschranken (8) vorgesehen sind, um eine Ortsbestimmung des jeweiligen Behälters (5) auf der Horizontalfördereinrichtung (1) vorzunehmen.

**5.** Verfahren nach einem der voranstehenden Ansprüche,
**dadurch gekennzeichnet,**
**dass** die Lichtschranken (8) mit der Steuerung in Verbindung stehen.

**6.** Vorrichtung zum Sortieren von auf einer Horizontalfördereinrichtung transportierten Behältern (5), wobei der Horizontalfördereinrichtung (1) mehrere Hubeinrichtungen (2) zugeordnet sind, wobei die mehreren Hubeinrichtungen (2) nebeneinander entlang der Horizontalfördereinrichtung (1) angeordnet sind, wobei eine Steuerung vorgesehen ist, wobei durch die Steuerung eine oder mehrere Hubeinrichtungen (20) aktiviert werden, um einen oder mehrere bestimmte Behälter aus dem Weg nachfolgender Behälter (5) auf der Horizontalfördereinrichtung (1) zu verbringen, und wobei danach durch die Hubeinrichtungen die aufgenommenen Behälter zu einer vorbestimmbaren Zeit, in vorbestimmbarer Reihenfolge auf der Horizontalfördereinrichtung (1) abgesetzt werden, wobei die Horizontalfördereinrichtung (1) im Bereich der Hubeinrichtungen Durchtrittsöffnungen (7) aufweist, wobei die Hubeinrichtung (20) jeweils ein Gestell (21) aufweist, wobei das Gestell einen im Gestell vertikal verfahrbaren Schlitten (25) mit einer Aufnahme (33) mit Armen (32) für einen Behälter (5) aufweist, wobei die Arme (32) in die Durchtrittsöffnungen (7) der Horizontalfördereinrichtung eintauchen, wobei der Schlitten mit einem Antrieb (9, 28) in Verbindung steht.

**7.** Vorrichtung nach Anspruch 6,
**dadurch gekennzeichnet,**
**dass** die Horizontalfördereinrichtung (1) im Bereich der Hubeinrichtungen (20) Rollen (2) aufweist, die, zur Bildung der Durchtrittsöffnungen (7), beabstandet zueinander verlaufen.

**8.** Vorrichtung nach Anspruch 6 oder 7,
**dadurch gekennzeichnet,**
**dass** der Schlitten (25) durch Rollen (36a, 36b; 37a, 37b) im Gestell (21) geführt verfahrbar ist.

**9.** Vorrichtung nach einem der Ansprüche 6 bis 8,
**dadurch gekennzeichnet,**
**dass** der Antrieb einen Kurbeltrieb (9) umfasst.

**10.** Vorrichtung nach Anspruch 9,
**dadurch gekennzeichnet,**
**dass** der Schlitten (25) eine quer zur Hubrichtung verlaufende Führungsschiene umfasst, wobei der Kurbeltrieb (9) einen Kurbelarm (29) aufweist, wobei der Kurbelarm (29) an seinem einen Ende mit dem Antriebsmotor (28) des Antriebs in Verbindung steht, und wobei der Kurbelarm (29) mit seinem anderen Ende verschieblich in der Führungsschiene (31) gelagert ist.

**11.** Vorrichtung nach Anspruch 10,
**dadurch gekennzeichnet,**
**dass** der Kurbelarm (29) endseitig eine Rolle (29a) zur Aufnahme durch die Führungsschiene (31) aufweist.

**12.** Vorrichtung nach Anspruch 10,
**dadurch gekennzeichnet,**
**dass** der Antriebsmotor (28) ortsfest im Gestell (21) gelagert ist.

**13.** Regallager mit einer Vorrichtung zum Sortieren von auf einer Horizontalfördereinrichtung transportierten Behältern nach einem der Ansprüche 6 bis 12.
